# EUROPEAN PATENT APPLICATION

(11) **EP 4 117 128 A1**
(43) Date of publication of application: **11.01.2023**
(21) Application number: 22183636.4
(22) Date of filing: 07.07.2022
(51) Int. Cl.: H02G 3/04, H02G 3/06

(54) **CONFIGURABLE BEND OR JUNCTION ACCESSORY FOR A CABLE DUCTING SYSTEM**

(30) Priority: 09.07.2021 IT 202100018098
(71) Applicant: Bticino S.p.A., 21100 Varese (IT)
(72) Inventor: LAMENDOLA, Alessandro, I-21040 VARESE (IT); ROSA, Massimo, I-21040 VENEGONO INFERIORE (Varese) (IT)
(74) Representative: Deambrogi, Edgardo

(57) **Abstract**

A configurable bend or junction accessory (10) for cable ducts is described, comprising:
- a main body (12) with a box-like shape common to a plurality of possible accessory configurations, adapted to delimit therein a cable routing volume (V), which includes: a base wall (20), a pair of facing side walls (22', 22"), from which extends a portion (24) connecting to a first cable conduit or tray, and a pair of opposite open side faces (28', 28") each adapted to receive a respective removable configuration element (14; 16a; 16b); and
- a pair of removable configuration elements (14; 16a; 16b) selectable according to the intended use of the accessory (10) between a closed wall configuration element (14) and a configuration element (16a; 16b) for connecting to a cable conduit or tray (D1-D7).

## Description

The present invention relates to cable ducting systems for industrial electrical ducts, and in particular to routing accessories, including bend and junction accessories between rectilinear elements of a cable ducting system.

More specifically, it concerns a bend or junction accessory for cable ducts of a configurable type.

Every metal ducting system, when installed in civil or industrial environments, needs to make numerous route changes, including plane changes, turns, and section changes. These are made by employing routing accessories at the ends of rectilinear duct segments that allow a connection with contiguous rectilinear segments having a different direction or orientation.

A cable ducting system generally comprises rectilinear elements in the form of conduits or trays-such as closed or perforated conduits or trays, or wire or ladder trays-joined together by means of bend accessories (two-way) to achieve a change of direction in the path of a duct, or junction accessories (three-way or four-way) between routes of separate ducts.

The typical equipment of a cable ducting system comprises bend accessories for making flat, ascending, descending, or "S" bends, bends with plane variation (so-called oblique bends) and junction accessories such as T-branches (flat, ascending/descending, with plane variation), crossings (flat or vertical, possibly with plane variation or oblique) and duct cross-section reduction elements. This involves having numerous components in the catalog, for each size or finish of the ductwork, making the management of molded components, as well as the assembly and warehouse storage thereof, complex.

Furthermore, since each accessory is uniquely intended for the function for which it was designed, in the case of complex ductwork having a topology that is difficult to predict, the installer is forced to get in advance a number of item of accessories for each type of bend or junction that might be needed, with obvious disadvantages in terms of cost and space requirements in transporting components of the system, without the possibility of avoiding increased installation times in the event that an accessory that was not initially planned but is later indispensable is ultimately unavailable.

To remedy at least in part the inconvenience due to the increased bulk that would result from the prudent provision of a certain number of accessories for each type, it is possible to provide these accessories broken down into their constituent elements. This proves to be not always advantageous, as each accessory has specific constituent elements, and the assembly thereof at installation requires additional time and experience on the part of the installer, who is required to correctly recognize the parts to be assembled.

The object of the present invention is to provide a satisfactory solution to the problems set forth above, namely, to provide a set of bend and junction accessories for a cable ducting system which makes it possible to reduce the number of catalog components, thus simplifying the production and logistic-distribution chain, and which is adapted to allow the installation of electrical ductwork according to a topology that may be selected "in the field," at the time of the installation, or the adaptation of a preexisting duct to a new topology quickly and at no additional cost.

According to this invention, this object is achieved by a bend or junction accessory for cable ductings having the features set out in claim 1.

Particular embodiments form the subject of the dependent claims.

In summary, the present invention is based on the principle of providing a modular bend or junction accessory having a universal main body, possibly reproduced in multiple classes of conduit dimensions (width, height) and finishes, which may potentially assume the configuration of any possible bend or junction accessory of a cable ducting system by simply assembling on the main body removable, i.e., mutually replaceable, configuration elements of a reduced size that may be selected according to the intended use of the accessory.

Overall, the accessory has a box-like shape. The main body is preferably pre-constituted and includes a base wall, a pair of facing side walls, orthogonal to the base wall, from which a connecting portion extends to a first cable conduit or tray, and a pair of opposing side faces, orthogonal to the base wall and comprised between said side walls, each adapted to receive a respective removable configuration element, selectable according to the intended use of the accessory.

The configuration elements include a blind panel forming a closed wall and flanges with a box-like shape, preferably pre-constituted, adapted to connect to a respective cable conduit or tray, so that, depending on the selection and arrangement of the configuration elements, it is possible to create an accessory having accesses configurable in number and location. It is also possible that a panel forming a closed wall, in that it may not be penetrated by cables, is not a blind panel, but rather has an inspection opening.

Flanges with a box-like shape may be duly configured to make a connection with two parallel conduits, said conduits following separate paths downstream of the accessory, for example through the arrangement of an intermediate partition or more generally a reduction kit.

Advantageously, for each accessory adapted for a predetermined combination of height and width of the cable conduits or trays composing the cable ducting system where the accessory is installed and having a respective finish or surface treatment, a set of configuration elements having the same finish or surface treatment and compatible dimensions is available, which includes a blind panel and a pair of side flanges, together adapted for making all the most common possible combinations of bends or T-junctions, i.e., the six combinations of right bend with ascending plane variation, left bend with ascending plane variation, right bend with descending plane variation, left bend with descending plane variation, ascending T-branch with plane variation, descending T-branch with plane variation.

Both the main body and the flanges are composed of component parts that may be assembled by means of simple joining elements, such as by screwing or bolting, or quick-connect retaining devices, which are suitable to disassembly, if necessary, for convenient storage and transport.

Advantageously, the provision of a single main body common to a plurality of accessories, possibly reproduced in multiple size classes (width, height), makes it possible to drastically reduce the number of constituent elements for assembling different types of accessories (different for different types of bends or junctions), and consequently the storehouse costs.

Further features and advantages of the invention will be presented in greater detail in the following detailed description, given by way of non-limiting example, with reference to the attached drawings, wherein:
Fig. 1 is an exploded perspective view of a kit for a configurable accessory according to the present invention, comprising a common main body and related configuration elements composable therewith;
Fig. 2a, 2b and 2c are perspective views of the main body of the accessory of the invention, respectively, in an assembled condition shown in two different orientations and in a disassembled condition;
Fig. 3a and 3b are perspective views according to opposite points of view of a configuration element of the accessory of the invention;
Fig. 4a and 4b are perspective views of an assembled accessory of the invention, configured to make a T-junction and a bend accessory, respectively;
Fig. 5a, 5b, and 5c are perspective views relating to examples for making a bend or junction portion of a cable duct obtainable by employing accessories of the invention, including a configured accessory coupled with rectilinear elements of a cable duct for making a bend with descending plane variation, a bend with ascending plane variation, and an ascending T-branch, respectively.

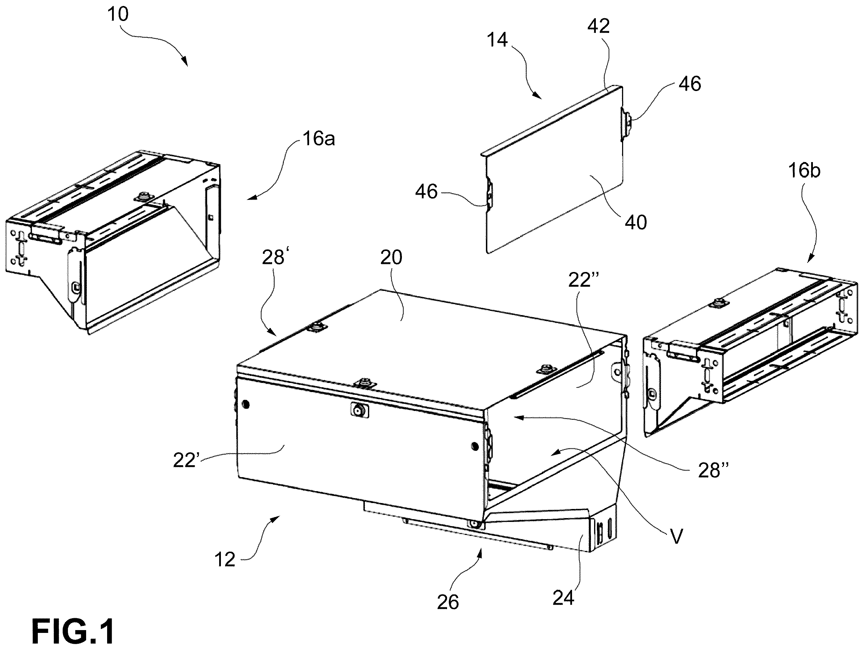

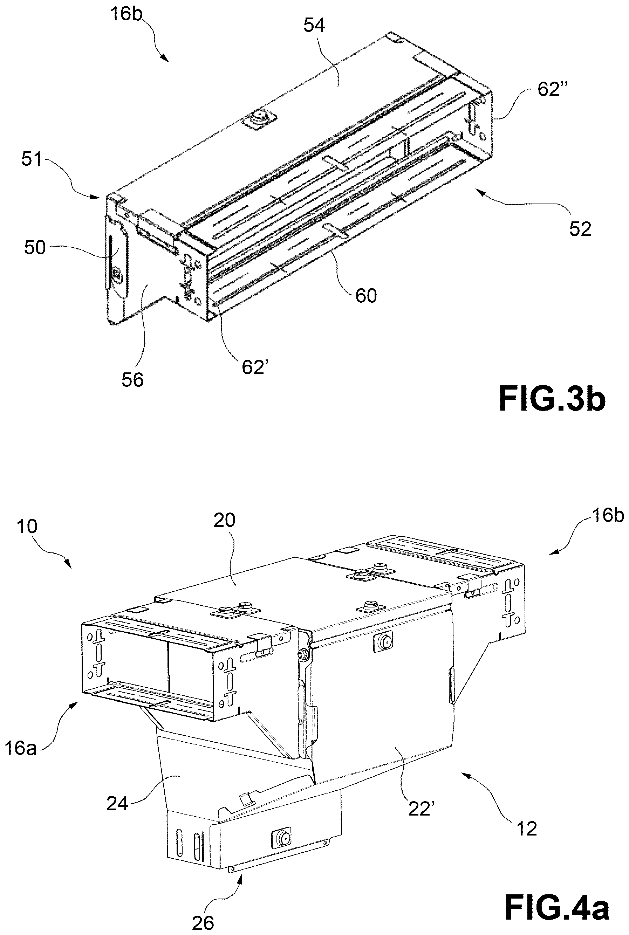

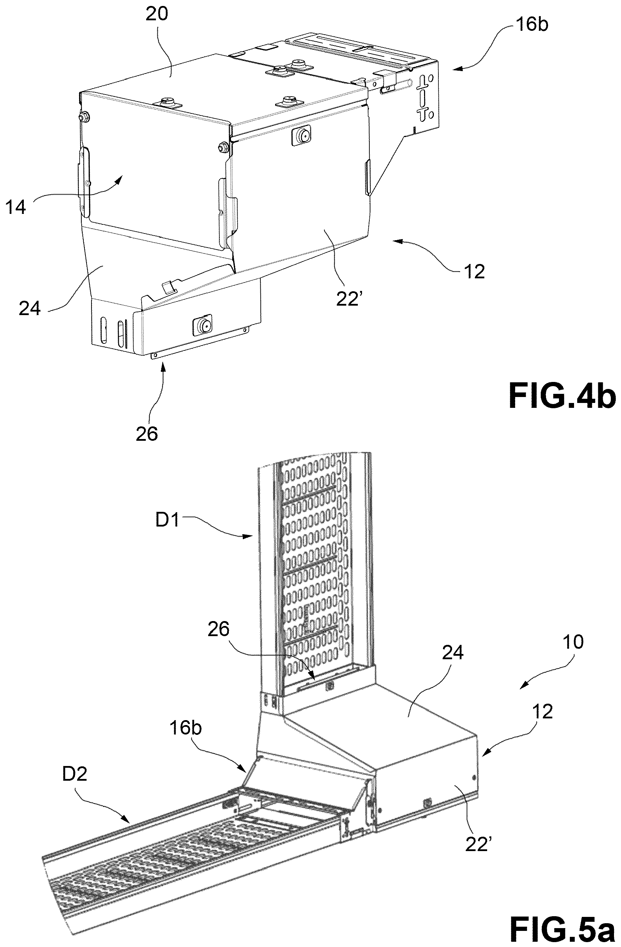

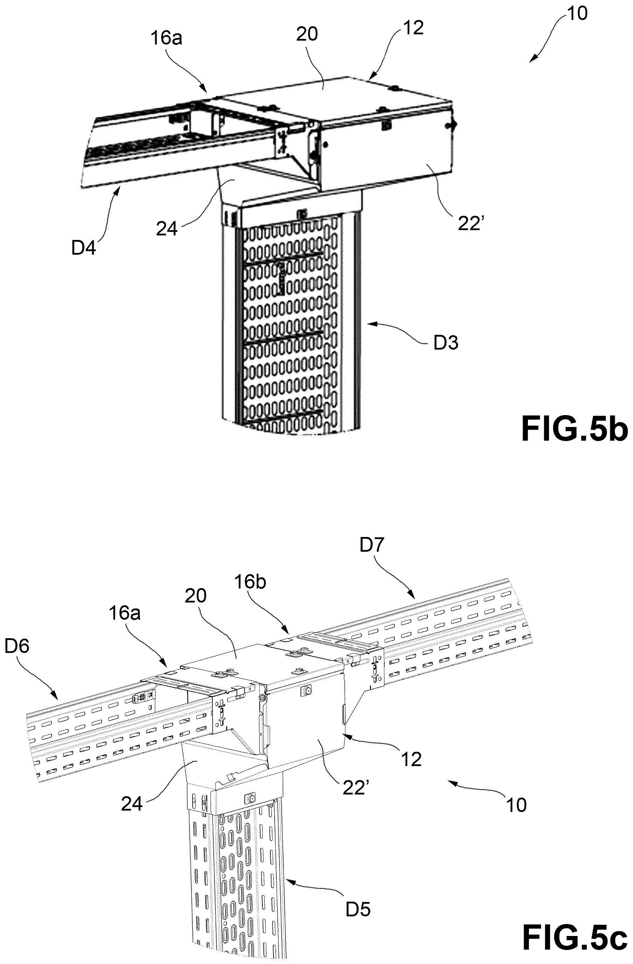

A bend or junction accessory configured according to the invention, in a currently preferred embodiment, is shown in the figures attached to the present description, in its components in Fig. 1, 2a-2c and 3a-3b, in its assembled condition in Fig. 4a and 4b, and in some exemplary conditions of use in Fig. 5a-5c, respectively.

It is denoted collectively as 10 and comprises a main body with a box-like shape 12, adapted to define therein a cable routing volume V, and a pair of removable configuration elements that may be selected according to the intended use of the accessory from between a closed wall configuration element and a configuration element connecting to a cable conduit or tray.

Fig. 1 shows a kit for a configurable accessory comprising a configuration element 14 with a closed wall and a pair of configuration elements 16a, 16b connecting to a respective cable conduit or tray.

The main body 12 includes a base wall 20 and a pair of facing side walls 22' and 22", orthogonal to the base wall. Extending from the side walls 22' and 22" and from the side opposite to the base wall 20 is a connection portion 24 intended to connect with a first cable conduit or tray (not shown in Fig. 1) that has, at the distal end from the side walls, i.e., at the side opposite to the base wall with respect to the cable routing volume, an opening 26 for access to the cable routing volume adapted to be coupled to an end section of said first cable conduit or tray. Advantageously, the cross-sectional area of the connection portion 24 decreases progressively from a defined base cross section between the side walls 22' and 22" toward the access opening 26, resulting in an overall tapered frusto-pyramidal shape. This advantageously allows the cables to be guided into the bend and avoids tight bends (90 degrees) of the cables around an edge.

The main body 12 also has a pair of open opposing side faces 28' and 28" that extend between the side walls 22' and 22" and are orthogonal to the base wall, each adapted to receive a respective removable configuration element, selectable depending on the intended use of the accessory between said closed wall configuration element and said configuration element connecting to a cable conduit or tray.

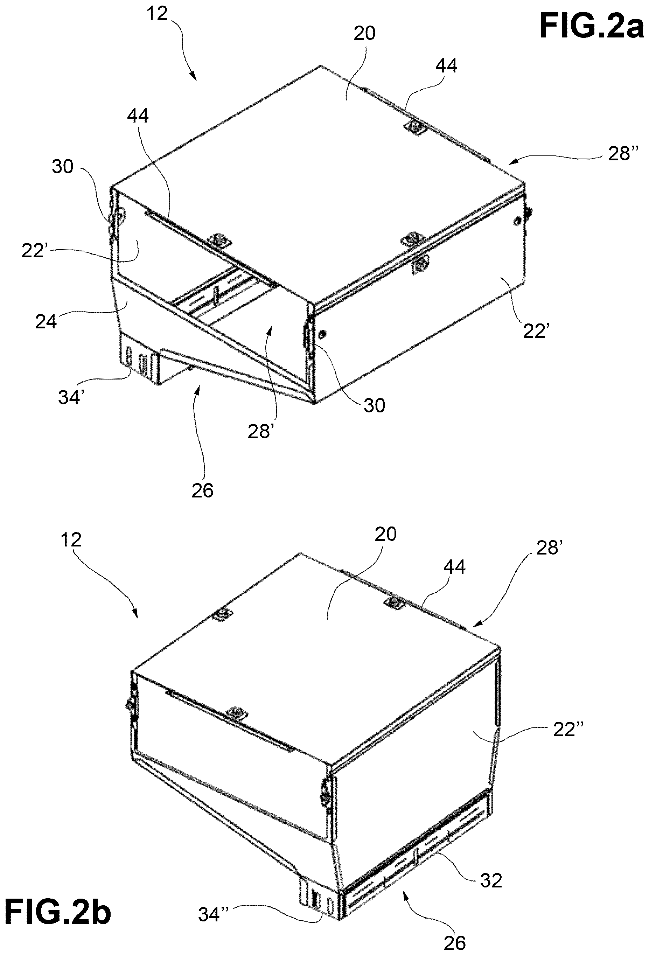

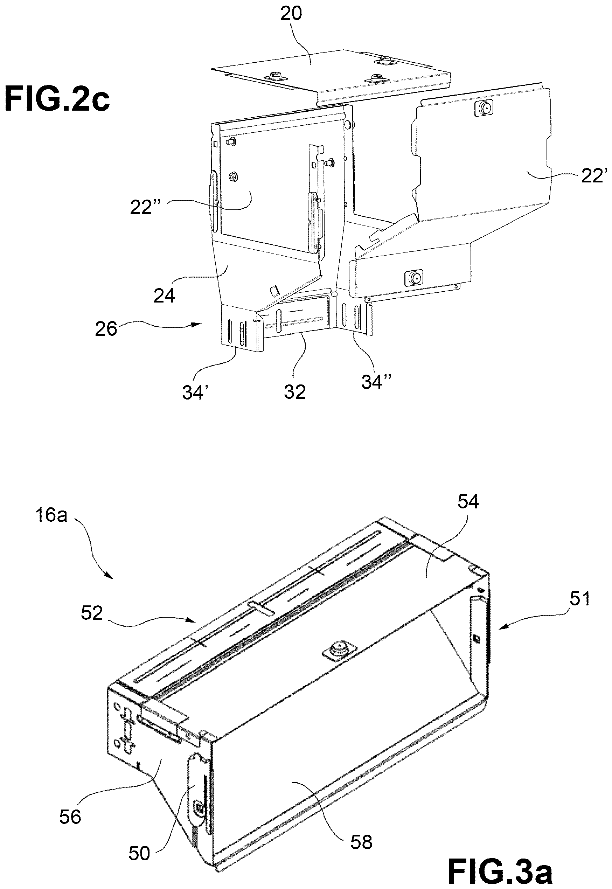

In Fig. 2a-2c the main body 12 is shown from different angles and in assembled and disassembled condition. Specifically, in a preferred embodiment, the base wall 20 is formed as a cover, adapted to be fitted on the edges of the side walls 22' and 22" opposite to the connection portion 24, for example, by interlocking the profiles of two opposing edges of the cover folded into corresponding grooves made on the edges of the side walls 22' and 22". The side wall 22' belongs to a first portion of a Z-folded sheet, which is integrally contiguous at a predetermined angle with a second portion of the sheet that defines a sloping front wall of the trapezoidal-shaped connection portion 24, resulting in a progressive reduction of the cross section of the connection portion 24. The second portion of the sheet is in turn integrally contiguous at a predetermined angle with a third portion of the sheet that defines a cover for an end section of the connection portion 24 near the access opening 26 to the cable routing volume.

On the other hand, the side wall 22" belongs to a first portion of a flat sheet having a second, integrally contiguous, trapezoidal portion that defines a bottom wall of the connection portion 24, the width of which is progressively reduced toward the end section of the connection portion 24.

The tapering of the bottom wall of the connection portion 24 and the slope of the front wall of the connection portion 24 are a function of a predetermined cross-sectional area of the access opening to the cable routing volume.

The free sides of the side walls 22' and 22" (or, in an alternative embodiment, the edges of the side faces 28' and 28") have means for coupling a respective configuration element to the main body in the form of flaps 30 folded parallel to the opening section of the side faces.

The end section of the connection portion 24 in the proximity of the opening 26 for access to the cable routing volume has a respective bottom wall and respective side walls arranged for stable mechanical connection with a segment of a cable ducting system, such as by known coupling means. The access opening of the portion for connecting to a first cable conduit or tray has a first bottom side 32, parallel to the base wall 20 and to the side walls 22', 22" of the main body, which is adapted to receive a bottom wall of said first cable conduit or tray, and a pair of facing lateral sides 34', 34", orthogonal to the bottom side 32, which are adapted to receive respective side walls of said first cable conduit or tray.

The closed wall configuration element 14 has a blind panel 40 having a base edge 42 folded at a right angle and adapted to cooperate with a support flap 44 projecting from the base wall 20 of the main body beyond the section of the face 28' or 28". On the other hand, the side edges of the panel 40 have respective opposing flaps 46 extending cantilevered in a plane parallel to the plane of the panel, adapted to cooperate with the flaps 30 at the opening section of the side faces.

The configuration elements 16a, 16b for connecting to a respective cable conduit or tray are made as flanges with a box-like shape and each has, on the one side, an end section 51 for connecting to the main body, with an area congruent with the respective side face 28', 28" of the main body and provided with means 50 for attaching to the flaps 30 obtained on the free sides of the side walls 22' and 22" (or, in an alternative embodiment, on the edges of the side faces 28' and 28"). On the opposite side they have a respective access opening 52 to the cable routing volume. Specifically, each configuration element 16a, 16b has a base wall 54 orthogonal to the end section connecting to the main body and the access opening, coplanar to the base wall 20 of the main body in a condition connecting the configuration element to the main body, a pair of side walls 56 of substantially trapezoidal shape, and a sloping fitting wall 58, which allows for obtaining the dimensions of the conduit to be connected to the accessory and the cables to be routed without requiring said cables to have tight bends (90 degrees) around an edge.

The base wall 54 and the fitting wall 58 may without distinction be made as covers. The base wall 54 and the inclined fitting wall 58 may have a rectangular or trapezoidal shape, in the latter case the side walls are converging with each other for connecting to a cable conduit or tray with a width less than the width of the side face 28', 28" of the main body.

The access opening 52 to the cable routing volume is adapted to be coupled to an end section of a respective second cable conduit or tray. The cross-sectional area of the connecting configuration element 16a, 16b decreases progressively from the end section connecting to the main body toward the access opening.

Near the access opening 52 to the cable routing volume, each connection configuration element 16a, 16b has a respective bottom wall and respective side walls arranged for stable mechanical connection with a segment of a cable ducting system, e.g., through known coupling means. The access opening 52 of the configuration element 16a, 16b connecting to a respective second cable conduit or tray has a first bottom side 60, parallel to the base wall 20 and orthogonal to the side walls 22', 22" of the main body, which is adapted to receive a bottom wall of said second cable conduit or tray, and a pair of facing lateral sides 62', 62", orthogonal to the bottom side 60, which are adapted to receive respective side walls of said second cable conduit or tray.

The selection and assembly of configuration elements 14, 16a, 16b on the main body 12 according to the planned topology of the cable ductwork gives the accessory the desired bend or junction accessory configuration. Fig. 5a-5c show some illustrative conditions of use, in which the configured accessory that is the subject of the invention is coupled to rectilinear elements of a cable duct for making a bend with descending plane variation between the ducts D1 and D2, a bend with ascending plane variation between the ducts D3 and D4, and an ascending T-branch between the ducts D5, D6 and D7, respectively.

Dual configurations may be obtained by simply reversing the spatial orientation of the cable conduits or trays when connecting with the accessory, as is immediately understandable to a person skilled in the art.

Clearly, the variants shown are not exhaustive of the possibilities for configuration element shapes, but rather are purely indicative, any other arrangements and sizes of elements and their respective access openings being possible without departing from the spirit of the invention.

For example, it is possible to provide openings divided by partitions for cable separation, with a view to coupling with cable ducts equipped with separating elements for sorting cables into divided compartments.

Although the accessory may also be made of plastic material by means of injection molding, it is preferably made of metal material by simple machining of metal sheets and ensuring the electrical grounding continuity of the entire duct system it helps to form.

Advantageously, gaskets may be interposed between the parts of the accessory and between the accessory and the configuration elements to ensure the sealing of the configuration accessory against the external environment.

Clearly, without prejudice to the principle of the invention, the manufacturing details and the embodiments may vary widely with respect to that which is described and illustrated purely by way of a non-limiting example, without departing from the scope of this invention as defined in the appended claims.

## Claims

1. A configurable bend or junction accessory (10) for cable ducts, comprising:
- a main body (12) with a box-like shape common to a plurality of possible accessory configurations, adapted to delimit therein a cable routing volume (V), which includes:
a base wall (20),
a pair of facing side walls (22', 22"), orthogonal to the base wall (20), from which the following extend:
a portion (24) for connecting to a first cable conduit or tray which presents, on the opposite side to the base wall (20) with respect to the cable routing volume (V), an opening (26) for accessing the cable routing volume (V) adapted to be coupled to an end section of said first cable conduit or tray, in which the cross-sectional area of said connection portion (24) decreases progressively starting from a section at the base defined between said side walls (22', 22") towards the access opening (26), and
a pair of opposite open side faces (28', 28"), orthogonal to the base wall (20) and arranged between said side walls (22', 22"), each adapted to receive a respective removable configuration element (14; 16a; 16b), selectable according to the intended use of the accessory (10); and
- a pair of removable configuration elements (14; 16a; 16b) selectable according to the intended use of the accessory (10) between a closed wall configuration element (14) and a configuration element (16a; 16b) for connecting to a cable conduit or tray (D1-D7).

2. The accessory (10) according to claim 1, wherein said portion (24) for connecting to a first cable conduit or tray has a substantially frusto-pyramidal shape.

3. The accessory (10) according to claim 2, wherein said portion (24) for connecting to a first cable conduit or tray has a plurality of inclined walls, the mutual inclination angle of which is a function of a predetermined cross-sectional area of the access opening (26).

4. The accessory (10) according to any of the preceding claims, wherein said access opening (26) of the portion (24) for connecting to a first cable conduit or tray has a first bottom side (32), parallel to the base wall (20) and to the side walls (22', 22") of the main body (12), which is adapted to receive a bottom wall of said first cable conduit or tray, and a pair of facing lateral sides (34', 34"), orthogonal to the bottom side (32), which are adapted to receive respective side walls of said first cable conduit or tray.

5. The accessory (10) according to any of the preceding claims, wherein said configuration element (16a; 16b) for connecting to a cable conduit or tray has, on one end, a terminal section (51) for connecting to the main body (12), with an area congruent to said side face (28', 28") and provided with means (50) for coupling to the side walls (22', 22") of the main body (12), and on the opposite end, an opening (52) for accessing the cable routing volume (V) adapted to be coupled to an end section of a second cable conduit or tray, wherein the cross-sectional area of said connection configuration element (16a; 16b) progressively decreases starting from the connection terminal section (51) towards the access opening (52).

6. The accessory (10) according to claim 5, wherein said access opening (52) of the configuration element (16a; 16b) for connecting to the second cable conduit or tray has a first bottom side (60), parallel to the base wall (20) and orthogonal to the side walls (22', 22") of the main body (12), which is adapted to receive a bottom wall of said second cable conduit or tray, and a pair of facing lateral sides (62', 62"), orthogonal to the bottom side (60), which are adapted to receive respective side walls of said second cable conduit or tray.

7. The accessory (10) according to claim 5 or 6, wherein said configuration element (16a; 16b) for connecting to the second cable conduit or tray has a box-like shape including a base wall (54) orthogonal to the terminal section (51) for connecting to the main body (12) and to the access opening (52), coplanar to the base wall (20) of the main body (12) in a condition of connecting the configuration element (16a; 16b) to the main body (12), a pair of side walls (56) having a substantially trapezoidal shape and an inclined fitting wall (58).

8. The accessory (10) according to claim 7, wherein the base wall (54) and the inclined fitting wall (58) of the configuration element (16a; 16b) for connecting to the second cable conduit or tray have a trapezoidal shape, and the side walls (56) are mutually converging for connecting to a cable conduit or tray having a width less than the width of the side face (28', 28") of the main body (12).
